# EUROPEAN PATENT SPECIFICATION

(11) **EP 4 709 640 B1**
(45) Date of publication and mention of the grant of the patent: **02.09.2026**
(21) Application number: 24766089.7
(22) Date of filing: 29.07.2024
(51) Int. Cl.: B64C 15/14, B64C 27/22, B64D 27/16, B64D 33/04, B64C 9/38, F02K 1/48, B64C 27/82

(54) **AIRCRAFT CONTROL SYSTEM**
FLUGZEUGSTEUERUNGSSYSTEM
SYSTÈME DE COMMANDE D'AÉRONEF

(30) Priority: 23.02.2024 KZ 20240159
(43) Date of publication of application: 18.03.2026
(73) Proprietor: Akhmejanov, Alibi, Uralsk City 090007 (KZ); Akhmejanov, Madi, Uralsk city, 090007 (KZ)
(72) Inventor: Akhmejanov, Alibi, Uralsk City 090007 (KZ); Akhmejanov, Madi, Uralsk city, 090007 (KZ)
(74) Representative: Jeck, Jonathan
(86) International application number: PCT/KZ2024/000021
(87) International publication number: WO 2025/178480

(56) References cited:
- WO-A1-2022/235145
- US-A1- 2015 107 225
- US-A1- 2020 198 772
- US-B2- 10 569 856

## Description

### Technical Field

The invention relates to aviation equipment, specifically to aircraft control devices and systems for controlling the aircraft moving in the Earth's atmosphere.

### Background Art

To fully substantiate the inventive level of the claimed object, both individual known aircraft control devices and known aircraft control systems that include combinations of several devices or means for control are considered as known analogs, when the features of the known analogs are similar to the features of the claimed object.

There are known aircraft control systems (see the reference: Aviation: Entsiklopediya / ed. by G. P. Svishchev. - Moscow: "Bolshaya Entsiklopediya", 1994. -736 p. - the reference to this source is optimal because it systematically organizes and elaborates on the meanings of aviation terms, concepts, and quantities, some of which are used for further presentation of the invention application material) containing control devices in the form of various aerodynamic surfaces that interact with the streams of surrounding air Bowing around the aircraft in flight, or interact with the gas streams exiting the nozzles of the aircraft's engines, During the interaction of air or gas streams with solid impermeable control surfaces, forces and moments of force arise. The change in magnitude and direction of forces and moments is a function of the aircraft control system, which is controlled by the pilot or automatic control system,

When moving through the atmosphere, there is an interaction between air particles and the impermeable surface of the aircraft body. The aircraft body contains aerodynamic surfaces used to generate various aerodynamic forces that perform various functions. For example, the lifting aerodynamic force generated by a wing-shaped aerodynamic surface serves to keep the aircraft airborne while moving in space (in flight). The aerodynamic force generated on control surfaces that change position relative to the wing or aircraft body serves to create variable in magnitude and direction control forces, necessary to change the position of the aircraft in space. The control forces that arise on control surfaces create control moments relative to the aircraft's centre of mass and determine the angular position of the aircraft body while moving along the flight trajectory. Aircraft flight takes place in an unsteady Earth's atmosphere. The aircraft body is blown by the incoming air flow caused by translational movement along the flight trajectory. Additional flows induced by the air flow around various parts of the aircraft located in front of the flow (for example, flow interference on the wing with air flow around the head of the aircraft fuselage) are superimposed on the incoming flow. Unsteadiness of atmosphere, headwinds, crosswinds, and wind gusts also have a dynamic effect on the aircraft body. In addition to the main task of controlling the flight trajectory, the aircraft control system must timely compensate and dampen the harmful disturbing effects of external forces, ensuring a stabilized flight.

The control of an aircraft refers to the creation of controlling forces and moments applied to the elements of the aircraft design, which aher the position of the aircrafts center of mass in space, as well as the position of the axes of the coordinate system associated with the aircraft when moving the flight trajectory. (Aviation: Entsiklopediya / ed. by G. P. Svishchev. - Moscow: "Bolshaya Entsiklopediya", 1994, - pp. 81-82, 500, 520-521).

The coordinate system (OXYZ) associated with the aircraft includes three mutually orthogonal axes OX, OY, and OZ, where point O is the origin. Typically, the aircraft has a symmetrical shape with a plane of symmetry and a longitudinal axis. The OX axis coincides with the longitudinal axis and is directed towards the nose of the aircraft. The OX axis and the OY axis perpendicular to it lie in the plane of symmetry, while the OZ axis is perpendicular to the plane of symmetry and completes the body axis coordinate system to the right one. The intersection of all three axes is the center of the body axis coordinate system. In the body axis coordinate system, the rotation of the aircraft relative to the longitudinal OX axis is called the aircraft roll, the rotation relative to the OY axis is called the aircraft yaw, and the rotation relative to the OZ axis is called the aircraft pitch. The result of the aircraft control system is a stabilized and controlled movement of the aircraft along its trajectory.

Since the value of aerodynamic forces generated on an aerodynamic surface is directly proportional to the value of the dynamic pressure of the incoming airflow, which is equal to half the product of air density and the square of airflow velocity (Aviation: Entsiklopediya / ed. by G. P. Svishchev. - Moscow: "Bolshaya Entsiklopediya", 1994. - p. 522), significant values of dynamic pressure of the airflow around the aerodynamic surfaces and the aircraft body need to be generated during flight in order to effectively create significant aerodynamic forces on the aerodynamic surfaces, These forces are required for the flight and control of the aircraft. The value of the aerodynamic force also depends on the area and shape of the wing, the curvature of the upper and lower wing surfaces, and the angle of incidence of the wing relative to the velocity vector of the airflow (angle of attack) running into the wing. To ensure stability and controllability in flight, a fixed-wing aircraft contains additional aerodynamic surfaces with movable deflectable parts of the surfaces, known as steering controls (Aviation: Entsiklopediya / ed. by G. P. Svishchev. - Moscow: "Bolshaya Entsiklopediya", 1994, - p. 490), which can be considered functionally analogous to the claimed object. When the steering controls are deflected, aerodynamic loads are redistributed on the aerodynamic surfaces, which is the cause of the forces that are used to create control and stabilizing forces. During the translational movement of an aircraft with a wing that is fixed relative to the aircraft body in the atmosphere, when the airflow runs into the wing at an angle of attack that is defined as the angle between the incoming flow velocity vector and the wing chord, a complex three-dimensional process occurs when the airflow simultaneously runs into the upper and lower wing surfaces. Due to different airflow velocities over the upper and lower surfaces, different pressures are established on each surface of the wing, causing a cross-wing force applied to the wing with a significant component perpendicular to the direction of the flow velocity vector. This method of generating aerodynamic forces and control moments of force is typical for aircrafts with wings fixed relative to the body.

The main disadvantage of aerodynamic surfaces in the form of aircraft steering controls is the reduced effectiveness in generating aerodynamic control forces at low flight speeds. In such cases, it is necessary to increase the area of steering controls, which leads to an increased weight of the aerodynamic surfaces and the entire aircraft. Moreover, at low speeds of the incoming airflow, steering controls become inefficient or useless.

There are known control surfaces called gas rudders, which are installed in the exhaust gas stream at the end of the rocket engine nozzle of an aircraft (Aviation: Entsiklopediya / ed. by G. P. Svishchev. Moscow: "Bolshaya Entsiklopediya", 1994. - p, 169). Gas rudders are rotating surfaces made of heat-resistant material and mounted at a fixed distance from the longitudinal OX axis of the aircraft in such a way that the axes of rotation of the gas rudders are parallel to the OY and OZ axes of the aircraft's body axis coordinate system, The deflection of the rocket engine's gas jet caused by the gas rudders causes the creation of significant control moments relative to the OY axis (yaw control) and the OZ axis (pitch control). It is also possible to create roll control moments relative the OX axis by oppositely deflecting the gas rudders,

The disadvantages of using gas rudders include a reduction of the thrust force of the rocket engine due to increased energy losses in the exhaust gas stream as a result of the gas-dynamic interaction between the gas flow and the surfaces of the gas rudders, as well as a significant wear on the surfaces of the gas rudders due to high temperatures and high velocity of the exhaust gases. Gas rudders are used for short-term operation during low-speed flight of the aircraft in the atmosphere when the aerodynamic control surfaces (steering controls) of the aircraft are ineffective.

Another type of wing movement that can generate aerodynamic forces on the wing is rotational movement. When a wing in the form of a plate with an aerodynamic profile in a section (blade) rotates relative to the axis passing through one of the ends of the wing, there is an interaction between the upper and lower surfaces of the wing (blade) with the surrounding air, similar to the interaction of a fixed wing with the incoming airflow. Several blades connected together by a hub form a multi-bladed rotor. This method of generating aerodynamic forces in rotational movement of the wing is typical for a rotorcraft, specifically for helicopters (see references: 1) Aviation: Entsiklopediya / ed. by G. P. Svishchev. - Moscow: "Bolshaya Entsiklopediya", 1994. - pp. 130-132; 2) U. Johnson. Helicopter Theory: In 2 volumes. Translated from English - Moscow: "Mir" Publishers, 1983. - (Aviatsionnaya I raketno-kosmicheskaya technika). Volume 1, pp. 1-41), which are known for their aircraft control system. Control and stabilization in such aircrafts are achieved by adjusting the angle of each blade of the multi-bladed rotor relative to the incoming airflow velocity vector during each blade rotation. A complex mechanism called swash plate is used to control each blade of the helicopter's rotor (Aviation: Entsiklopediya / ed. by G. P. Svishchev. - Moscow: "Bolshaya Entsiklopediya", 1994. - pp. 35 and 131). The swash plate mechanism changes the pitch angles (angles of attack) of each blade of the multi-bladed rotor. It leads to the deviation of the total aerodynamic force vector of the helicopter's main rotor from the normal OY axis of the helicopter, which is the source of the helicopter's movement in space. During flight, the helicopter, under the command of the control system, changes the angle of attack of each blade within a specified range, from minimum to maximum, during one rotation of the main rotor. When the angle of attack of the blades changes, the control forces of the swash plate actuation device work. Due to the limited capabilities of a single mail rotor in terms of creating control and stabilizing forces, there are many aircrafts with various numbers and configurations of main and additional rotors and surfaces. For instance, in the classic helicopter design with a single main rotor, an additional tail rotor on the tail boom is required to provide yaw control, as the blades of the multi-bladed main rotor can effectively create control moments relative to two of the helicopter's axes, OX and OZ (roll and pitch control). In classic helicopter designs with two main rotors, which rotate in opposite directions and are positioned according to coaxial, longitudinal, or transverse configurations, it is possible to create control moments relative to all three axes OX, OY, and OZ of the helicopter without using an additional tail rotor, As the helicopter moves through the air, the velocities of each point on the blade combine with the velocity of the incoming airflow, When the helicopter's speed increases, the capability to effectively and safely control the helicopter significantly decreases, making it difficult to timely dampen harmful disturbances of the external environment.

The general disadvantages of classic helicopter designs in terms of generating control forces and moments are as follows:
- The main rotor and the swash plate are highly loaded components of the aerodynamic load and control force generation system,
- Due to the differences in the vector addition of velocities for the blades of the main rotor incoming on the flow and running away from the flow, there are challenging limitations in ensuring helicopter balance in roll at high speeds and in generating aerodynamic forces on each blade for control and stabilization purposes.
- The small range of permissible aircraft balances reduces operational performance.

A known technical solution for the aircraft control system, which eliminates the use of the helicopters's tail rotor as a yaw control device and optimizes the interaction of the helicopter body with the surrounding airflows, is the NOTAR (No Tail Rotor) system (Patent US No. 4948068 «Curculation control slots in helicopter yaw control system», date of publication: Aug. 14, 1990), This control system allows for the creation of sufficient aerodynamic forces on the tail boom in order to compensate for the main rotor's reactive torque and to control the helicopters's yaw by using an additional fan that generates a high-energy gas-air mixture flow, which:
- passing through the slit openings on the side wall of the tail boom and actively interacting with the airflow of the main rotors, forms an aerodynamic moment relative to the normal OY axis of the helicopter, acting on the tail boom of the helicopter's body;
- entering the nozzle at the end of the tail boom, which is mounted perpendicular to the tail boom axis, forms a reactive moment relative to the normal OY axis of the helicopter, acting on the tail boom of the helicopter's body.

The drawback of this solution is the need for additional energy expenditure to create the high-energy gas-air mixture flow for generating the control moment that compensates for the main rotor's reactive torque. In the NOTAR system, control forces are created only relative to one axis of the helicopter, the OY axis.

A known technical solution for the aircraft control system with a main rotor is described in the reference (Patent US No. 8403255 «Compound aircraft with autorotation», date of publication: March 26, 2013). In this patent, a compound aircraft, which has wings with a variable angle of the wing chord relative to the longitudinal axis of the aircraft, a thruster, a main rotor, and a clutch connecting the engines to the main rotor, is described. When the appropriate translational speed is reached, the control system of the compound aircraft unloads the main rotor and disengages the clutch, disconnecting the main rotor from the engines. The control system adjusts the actuation devices of the swash plate in order to ensure autorotation of the main rotor. In the described compound aircraft, one of the control elements is a thruster, which is a curved cylindrical channel with a vertical rotating surface inside, used to change the direction of the airflow of the pusher located in the tail end of the fuselage. The pusher also serves to increase the translational speed of the compound aircraft. The redirection of the airflow from the pusher using the shape of the curved cylindrical channel and the rotating surface allows for controlled compensation of the reactive torque when the main rotor of the compound aircraft rotates. The constructive solutions described in the patent are intended to provide the capability of vertical takeoff, like a helicopter, while also allowing high cruising speed flights, like an airplane.

The drawbacks of the technical solution in the compound aircraft are the following:
- the need for additional energy expenditure to create a high-energy airflow for generating the control moment that compensates for the main rotors reactive torque;
- control forces are created only relative to one axis of the helicopter, the OY axis;
- the airflow of the pusher, passing through the curved cylindrical channel and around the rotating surface, generates increased friction losses due to the viscosity of the air,

One of the most promising approaches to the technical solution for safely increasing the speed of a rotorcraft is to reduce the total energy expenditure for control and stabilization during flight by equipping the aircraft with an additional device or a system of devices, These additional devices or systems would also serve as a source of lifting force and additional thrust of the aircraft. By creating forces and moments, the additional device of control system, in conjunction with traditional rotorcraft control means, can significantly improve the accuracy and case of control, as well as increase the speed of response of the control system to various disturbing factors in the air environment.

The closest analogous prototype is a control system of an aircraft described in the reference (Patent of the Republic of Kazakhstan No. 35680 "Aerodynamic Device", published on May 27, 2022), which contains several identical modules (devices) where each module is designed as a wing unit. According to the reference, the wing unit can be applied using a modular principle by docking (into the power frame) to create an aircraft, as shown in Fig, 8 of the reference, capable of vertical takeoff, landing, horizontal flight, and hovering at any point in the airspace. The known wing unit generates its own airflow and includes aerodynamic elements that, when interacting with the airflow of the wing unit, create aerodynamic forces that change their direction and value relative to the axes of the aircraft body axis coordinate system. It contains a fan air blower and an aerodynamic special-shaped wing located under the blower, which is connected to it by mechanical components and designed in the form of a double-curved open surface made up by a system of longitudinal grooves along the entire wing surface and with a vertical longitudinal plane of symmetry. Along the trajectory of the airflow, the wing has a convergent segment and a divergent segment, between the convergent and the divergent segments there is a smooth transitional segment. The wing longitudinal outlines have end elements. The system of longitudinal grooves of the wing consists of the central grooves provided in the wing central part and of lateral grooves provided in the wing side parts, The vertices of the central and lateral grooves are rounded, in so doing, the generatrix curvature radii for the groove vertices are smaller than the generatrix curvature radii for the groove lower parts. The wing unit contains a circular flow straightener mounted coaxially with the fan between the fan and the wing leading edge, rigidly connected to the fan frame. There is a cylindrical fairing mounted coaxially with the fan in front of the wing leading edge. Inside the fairing there are a flow straightener and a fan.

US2020198772A1 relates to an aerodynamic apparatus that increases the efficiency of airflow power used to generate lifting force, control moments, and reactive thrust of the apparatus. For this purpose, the aerodynamic apparatus includes a body, fan blowers with drive motors, wings, a system for operating medium temperature control, and an external communication unit with openings in the external body. The principal design solutions involve the use of a primary rotary wing and a steering rotary wing, both made in a petal-like shape, along with sphere-shaped external, middle, and internal bodies that influence the motion of the operating medium. These design features optimize the operating medium flow segments by creating sphere-shaped paths, thereby minimizing losses due to airflow friction. The functions of the external communication unit are performed by motor-driven valves.

The technical result of known analogues is the creation of control forces and moments using the aerodynamic method of interaction between the airflow and aerodynamic surfaces.

Common drawbacks of known analogues include increased energy consumption by control systems in order to create control actions, leading to low efficiency in the process of generating forces and moments for controlling and stabilizing the aircraft in flight.

### Summary of Invention

The technical task of the invention is to create a new aircraft control system that
- ensures increased efficiency in the control and stabilization of the aircraft's movement in all modes of takeoff, landing, along the trajectory, and hovering in the air by using an additional control source with a high level of response speed or reduced reaction time on control commands of the control system;
- contributes to increasing the aircraft's speed due to an additional reactive impulse of the descending airflow of the wing unit in the proposed control system;
- and also increases the range of center of gravity positions, facilitating the process of longitudinal and lateral balancing of the aircraft in various flight modes.

To solve the technical problem, the aircraft control system contains two identical modules in the form of a wing unit, each of which contains a fan air blower and an aerodynamic special-shaped wing positioned in the airflow of the blower, connected to it and designed in the form of a double-curved open surface made up by a system of longitudinal grooves along the entire wing surface and with a vertical longitudinal plane of symmetry; along the trajectory of the airflow, the wing has a convergent segment and a divergent segment, between the convergent and the divergent segments there is a smooth transitional segment; the wing outlines have end elements; the system of longitudinal grooves of the wing consists of the central grooves provided in the wing central part and of the lateral grooves provided in the wing side parts; the vertices of the central and lateral grooves are rounded, in so doing, the generatrix curvature radii for the groove vertices are smaller than the generatrix curvature radii for the groove lower parts; the wing unit contains a flow straightener mounted coaxially with the fan between the fan and the wing leading edge and rigidly connected to the fan frame; there is a framing cylindrical fairing mounted coaxially with the fan in front of the wing leading edge, inside which there are a circular flow straightener and a fan; **in accordance with the invention,** two identical modular wing units are symmetrically located relative to the longitudinal plane of symmetry of the aircraft and connected to each other by a rigid cross-sectional power element, which is positioned perpendicular to the longitudinal plane of symmetry of the aircraft and equipped with fastening elements. These fastening elements rigidly attach the cross-sectional power element to the aircraft body, in so doing, the cross-sectional power element with fastening elements is rigidly framed by a fairing of the cross-sectional power element, which has an aerodynamic profile in the cross-section. The wing unit contains "i" number of special-shaped wings, where "i" ranges from 3 to 7, and is designed so that each special-shaped wing can be placed in specific sectors of a circle representing the cross-section of the airflow coming from the fan, and, due to this positioning capability, each wing is characterized as a sector wing. The sector wings are installed at an equal distance from the fan's axis of rotation and can move around the fan's longitudinal axis along a circular trajectory, ensuring that during circular movement, the fan's longitudinal axis always lies in the longitudinal plane of symmetry of each sector wing. The circular movements of the sector wings around the fan's longitudinal axis are ensured by a special wing gearbox design, in which each sector wing is rigidly attached to one gear wheel with ring grooves on both sides for bearing balls placement, and, together with the supporting power rings and the housing of the wing gearbox, they form a double-sided ball bearing assembly. The gear wheel is driven into circular motion by a pinion cog rigidly mounted on the movable rotor of an electric drive motor, and the motor housing is rigidly installed in the wing gearbox housing. Each sector wing is installed in the wing unit so that the area of the wing gearbox housing is located at the transitional segment of each sector wing, and the following ratios are maintained: the ratio of the distance from the leading edge of the sector wing to the leading edge of the wing gearbox housing to the length of the convergent segment of the sector wing (V/L₁) lies in the range of 1.1 to 1.2, and the ratio of the longitudinal linear size of the wing gearbox housing to the length of the transition segment of the sector wing (W/L₂) lies in the range of 0.3 to 0.8. The sector wings, rotating relative to the fan's longitudinal axis of rotation, can form movable cornbinations with each other by interlocking along the wings' lateral longitudinal surfaces. The surfaces of the left and right tips of the sector wing constitute the left and right lateral surfaces of the sector wing, accordingly, and are designed as longitudinal flanges with a width S_{sw}, cantilevered to the left and right from the longitudinal plane of symmetry of the sector wing. When joined across the entire area of the flanges, they can create combined surfaces of the sector wings and, through a hermetic joint, prevent air flowing from the high-pressure zone on the lower surface of the sector wing to the low-pressure zone on the upper surface of the sector wing. The width of the flange S_{sw} is constant along the entire length L_{sw} of the sector wing, and the ratio of the flange width to the fan's internal frame diameter S_{sw} /D₀ lies in the range from 0.05 to 0.15 along the entire length L_{sw} of the sector wing. Each "i" sector wing is characterized by an opening angle α_{swi}, which is the angle between two planes that pass along the surfaces of the right and left tips of the wing, downstream from the fun, so that these planes intersect in a line coinciding with the fan's axis of rotation. The opening angle for an individual "i" sector wing α_{swi} is similar across the convergent, transitional, and divergent segments, in so doing, for all sector wings, the opening angle has the same numerical value, and the minimum value of an opening angle of a sector wing shall be no less than 40⁰. The opening angles of the sector wings in each wing unit are characterized by the following ratio: the sum of the opening angles of all "i" sector wings of one wing unit Σα_{swi} ranges from 120⁰ to 300⁰. The proposed control system is installed in an aircraft with a rotor, and it can be installed in the rear part of the aircrafts body behind the axis of rotation of the main rotors, or in the front part of the aircraffs body in front of the axis of rotation of the main rotors. When the control system is located behind the axis of rotation of the main rotors, the following ratio must be followed: the ratio of the value C₁, equal to the distance from the center of rotation of the main rotors to the leading edge of the wing unit, to the value C₂, equal to half the diameter of the circle swept by the main rotors, namely C₁ / C₂, should lie in the range from 1.2 to 3. When the control system is located in front of the axis of rotation of the main rotors, the following ratio must be followed: the ratio of the difference between the value C₁ and the value L_{BW}, equal to the length of the wing unit, to the value C₂, namely (C₁ - L_{BW}) / C₂, should lie in the range from to 3,

Thus, the proposed object in the form of a control system with two wing units placed on the aircraft allows, for control purposes, to change the direction and value of the cross-wind aerodynamic forces and moments of the aircraft, which is achieved by the fact that, in such a design of the wing units and the movable sector wings installed in them, circular movements around the longitudinal axis of the fan rotation can be performed, and the areas of adjacent sector wings interacting with the high-energy airflow of the fan can be combined by side flange interlocking.

### Brief Description of Drawings

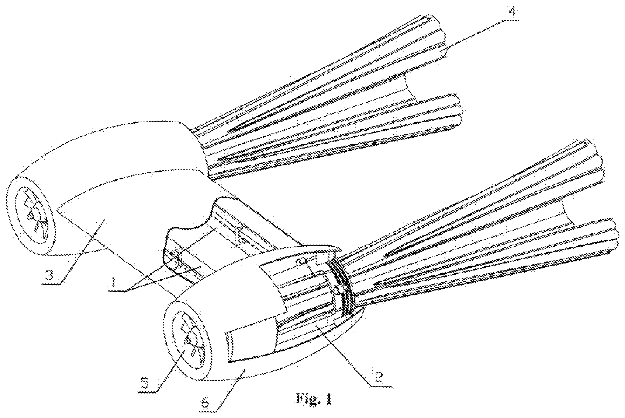

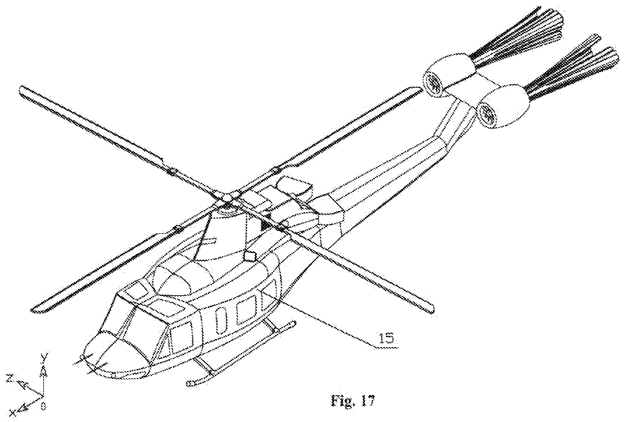

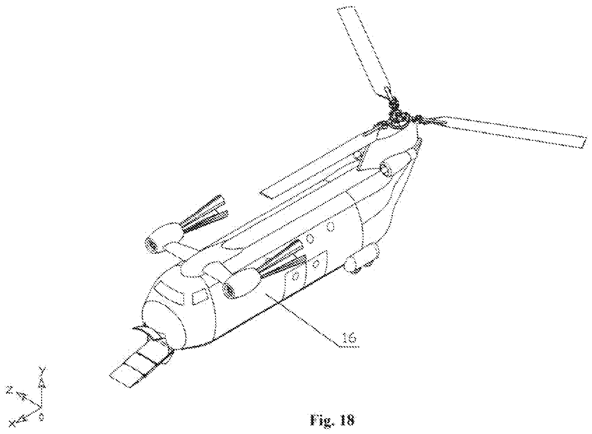

Figures 1-20 are presented below for some of the best embodiments of the proposed object, illustrating the essence of the invention. This is based on the fact that the most effective implementation of the essence of the invention is achieved in the aircraft with a main rotor in two layout options, where the proposed control system includes two wing units mounted cantilevered on the left and right relative to the longitudinal plane of symmetry of the aircraft with a main rotor. In the first option, the proposed control system is located behind the main rotor as shown in Fig. 17, and in the second option, it is located in front of the main rotor, as shown in Fig. 18. These configurations allow to create control moments relative to the longitudinal OX, normal OY, and transverse OZ axes associated with the aircraft body, enabling control of roll, yaw, and pitch. These layout solutions increase control moments of forces by extending the arm of force to the center of gravity and also expand the range of center of gravity positions, which facilitates the longitudinal and transverse balancing of the aircraft in different flight modes.

As an example, a case where the proposed wing unit contains three sector wings is considered. This consideration is optimal and sufficient because the working and physical processes will be similar for a different number of sector wings in the wing unit from the claimed range, as follows from the further disclosure of the essence of the invention,

It should also be noted that for a clear disclosure of the essence of the invention: 1) each individual figure mainly shows only those elements of the claimed object necessary to illustrate the essence of a particular part of the invention description (excluding unnecessary elements, which are mentally omitted); 2) furthermore, in the description and in the claims of the invention, certain structural elements of the object are characterized by theirability to perform specific functions, which corresponds to international patenting rules under the "device" category.

On the figures the following objects and elements are shown, the names and numbers of which are provided below in the table for ease of understanding and presenting the essence of the invention. It should be noted that when using the position names in the text as a phrase of several words, the position number will be placed immediately after the main key word that distinguishes and characterizes the name, rather than at the end of the phrase after its last word, which may coincide with the last word of another name.

Fig. 1 shows an axonometric view of the proposed control system consisting of two identical symmetrically installed proposed wing units connected by the cross-sectional 1 power element with the fairing 3 of the cross-sectional power element, which has an aerodynamic profile in cross-section. Each wing unit has a fan frame 5, three sector wings 4, a power housing 2 of the wing unit, and a fairing 6 of the wing unit, In the presented view, for better visualization, the power housing 2 of the wing unit is rotated relative to the longitudinal axis of symmetry,

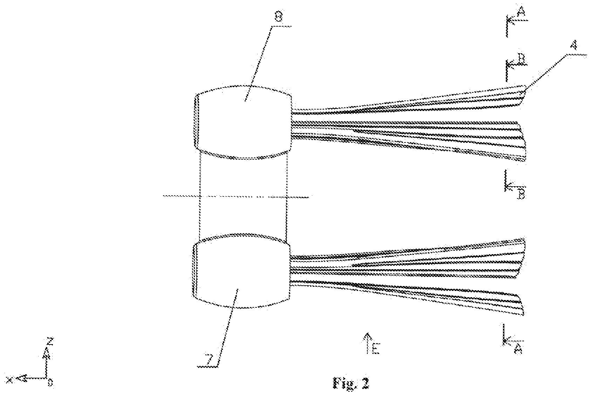

Fig. 2 is a top view of the proposed control system consisting of two wing units, the left 7 wing unit is installed on the left side of the flight direction of the aircraft, the right 8 wing unit is installed on the right side, and the sector wings 4. The direction of the side view E and the placement of sections A-A and B-B are shown.

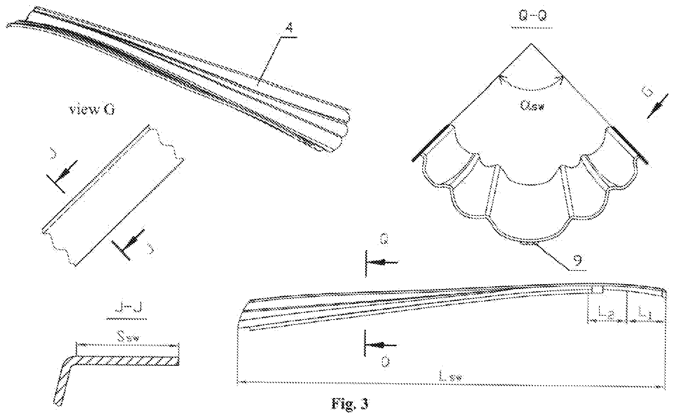

Fig. 3 is an axonometric view of the sector wing 4, a side view of the sector wing 4 with the reinforcing element 9 of the sector wing, the cross-section Q-Q of the sector wing 4, and the view G. The cross-section J-J shows the width of the flange S_{sw} on the lateral parts of the sector wing 4 from the edge of the sector wing 4 to the beginning of the radius part of the curved surface of the sector wing 4. The opening angle α_{sw}, which is equal to the angle between two planes passing through the surfaces of the right and left flanges, in the flow from the fan, so that these planes intersect along a line coinciding with the axis of rotation of the fan: the total length L_{sw} of the sector wing 4; the length L₁ of the convergent segment of the sector wing 4; the length L₂ of the transitional segment of the sector wing 4, are shown.

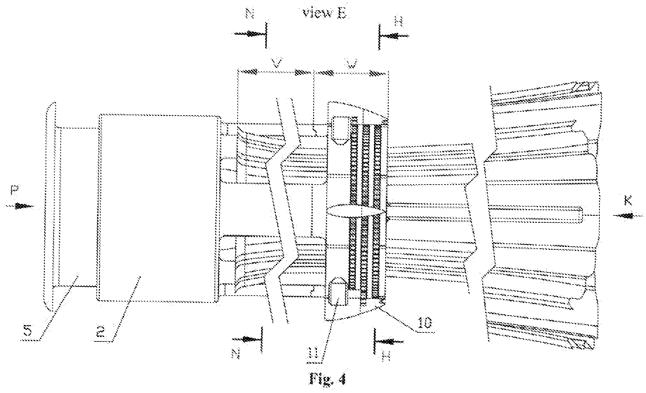

Fig. 4 shows view E of the wing unit, the placement of sections N-N and H-H. and views P and K. The fan frame 5, the power housing 2 of the wing unit, the wing gearbox body 10, and the electric drive motor 11 are shown. The listed elements are rigidly connected to each other, the placement of the movable sector wings 4, and the following Table

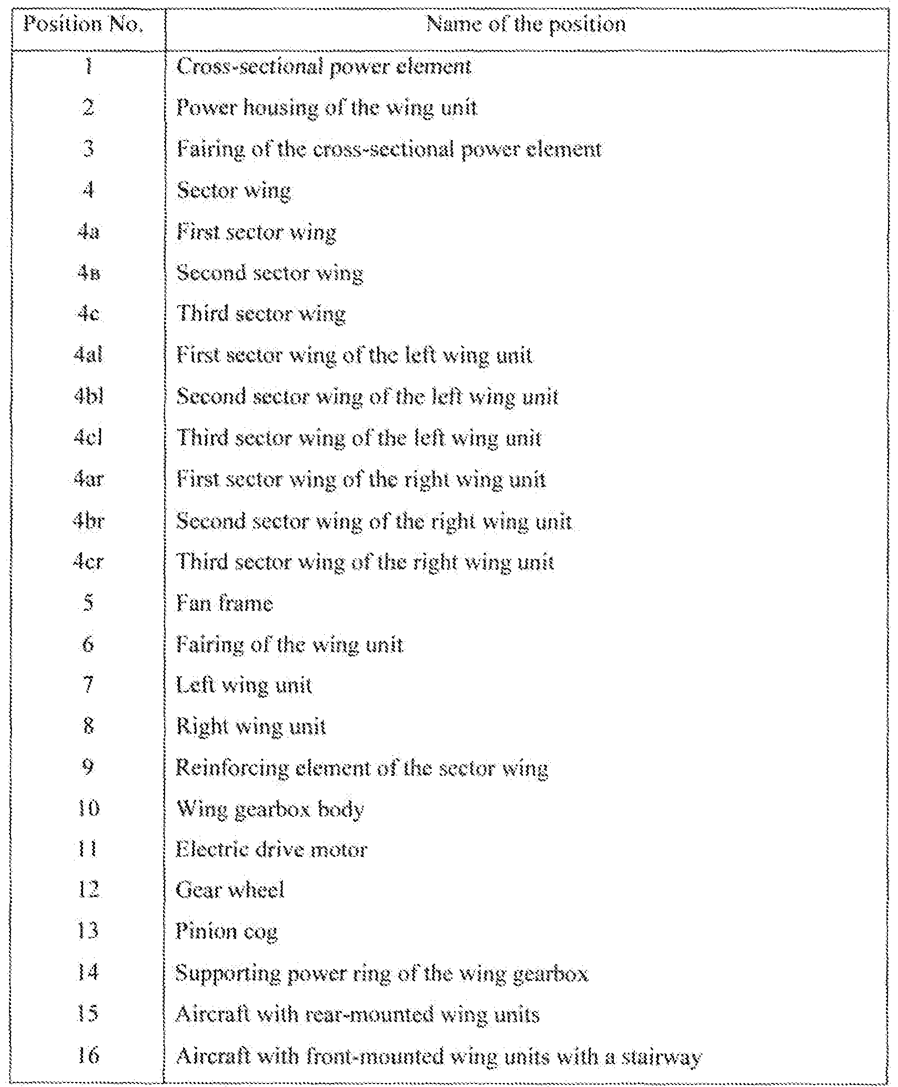

dimensions along the OX axis are shown: the distance V from the leading edge of the sector wing 4 to the leading edge of the wing gearbox body 10 and the longitudinal size W of the wing gearbox body 10, while the fairing 6 of the sector wing unit is not shown conditionally.

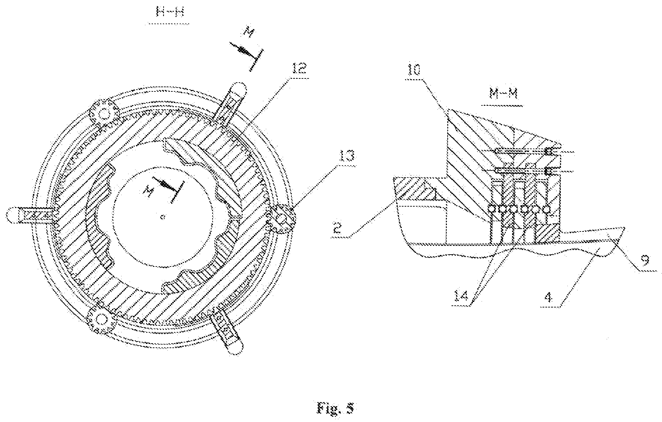

Fig. 5 shows section H-H, the power housing 2 of the wing unit, the wing gearbox body 10, where each controlled gear wheel 12 is rigidly attached to one of the sector wings 4, which has the reinforcing element 9 of the sector wing. The gear wheel 12 is connected to the pinion cog 13, which is rigidly mounted on the axis of rotation of the electric drive motor 11. In section M-M, the structural scheme of the wing gearbox body 10 shows the installation of the gear wheels 12 and the supporting power rings 14 of the wing gearbox, The rotor blades of the fan and the blades of the straightener are not shown conditionally.

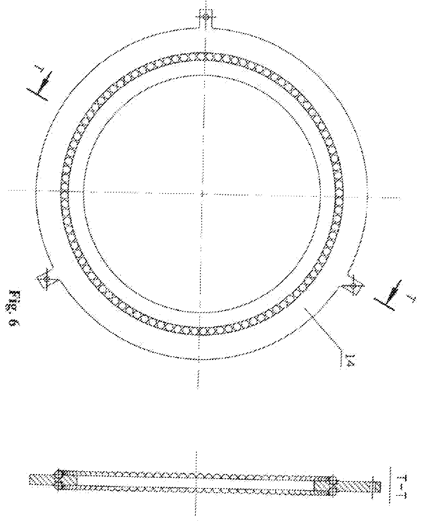

Fig. 6 is supporting power ring 14 of the wing gearbox, which is an element of the double-sided ball bearing assembly, Section T-T shows a cross-section of the supporting power ring 14 of the wing gearbox. The power rings 14 of the wing gearbox are installed between the gear wheels 12 to ensure the free rotation of the gear wheels 12.

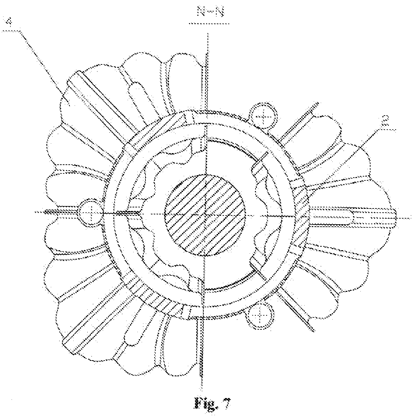

Fig. 7 is section N-N, the placement of the movable sector wings 4 of the wing unit, the view, and the cross-section of the elements of the power housing 2 of the wing unit.

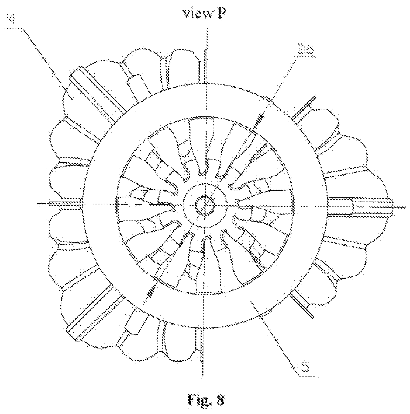

Fig. 8 shows view P, the placement of the movable sector wings 4 of the wing unit, the rotor blades in the fan frame 5. The diameter D_{O} of the flow part of the fan frame 5 is shown. The blades of the straightener are not shown conditionally,

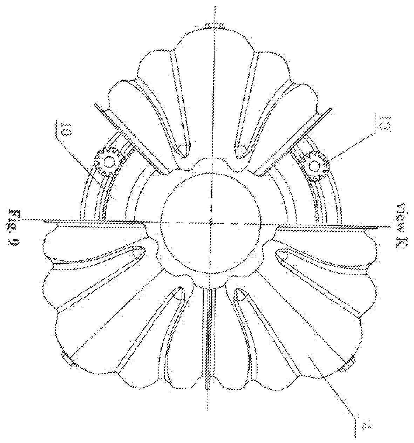

Fig. 9 is view K, the placement of the movable sector wings 4 of the wing unit, the wing gearbox body 10, and the pinion cog 13, The rotor blades of the fan and the blades of the straightener are not shown conditionally.

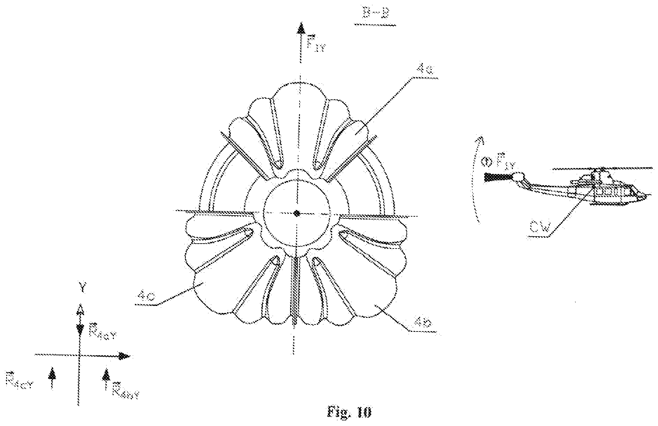

Fig. 10 is section B-B, the position of sector wings 4 of the right 8 wing unit, projection directions R̅→_{4aY}, R̅→_{4bY}, R̅→_{4cY} of forces acting respectively on the movable sector wings 4a, 4b, 4c of the wing unit, and the projection direction of the resultant force F̅→_{IY} in the vertical plane YOZ. The arc arrow shows the direction of the aircraft body's pitch down rotation under the action of force F̅→_{IY} relative to the center of gravity CW. The position of sector wings 4 in the left 7 wing unit is similar to the position of sector wings 4 in the right 8 wing unit, The rotor blades of the fan and the blades of the straightener are not shown conditionally.

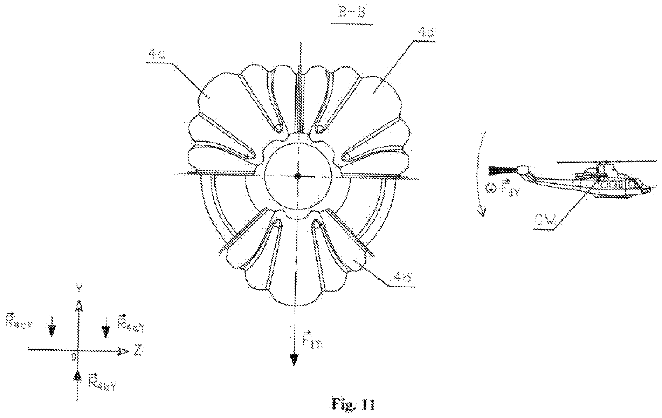

Fig. 11 is section B-B, the position of sector wings 4 of the right sector wing unit 8, projection directions R̅→_{4aY}, R̅→_{4bY}, R̅→_{4cY} of forces acting respectively on the movable sector wings 4a, 4b, 4c of the wing unit, and the projection direction of the resultant force F̅→_{IY} in the vertical plane YOZ. The arc arrow shows the direction of the aircraft body's pitch up rotation under the action of force F̅→_{IY} relative to the center of grav ity CW. The position of sector wings 4 in the left 7 sector wing unit is similar to the position of sector wings 4 in the right 8 sector wing unit. The rotor blades of the fan and the blades of the straightener are not shown conditionally.

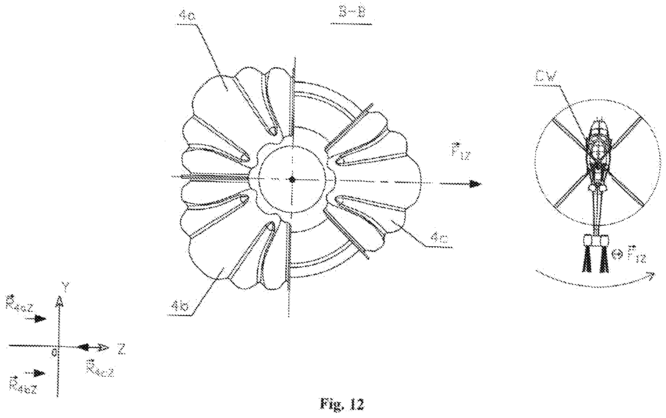

Fig. 12 is section B-B, the position of sector wings 4 of the right 8 wing unit, projection directions R̅→_{4aZ}, R̅→_{4bZ}, R̅→_{4cZ} of forces acting respectively on the movable sector wings 4a, 4b, 4c of the wing unit, and the projection direction of the resultant force F̅→_{IZ} in the vertical plane YOZ. The arc arrow shows the direction of the aircraft body's yaw left rotation under the action of force F̅→_{IZ} relative to the center of gravity CW. The position of sector wings 4 in the left 7 wing unit is similar to the position of sector wings 4 in the right 8 wing unit. The rotor blades of the fan and the blades of the straightener are not shown conditionally,

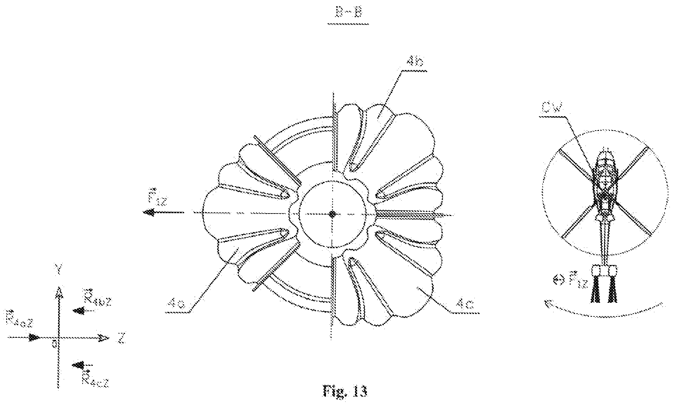

Fig. 13 is section B-B, the position of sector wings of the right 8 wing unit, projection directions R̅→_{4aZ}, R̅→_{4bZ}, R̅→_{4cZ} of forces acting respectively on the movable sector wings 4a, 4b, 4c of the wing unit, and the projection direction of the resuliant force F̅→_{IZ} in the vertical plane YOZ, The are arrow shows the direction of the aircraft body's yaw right rotation under the action of force F̅→_{IZ} relative to the center of gravity CW. The position of sector wings in the left 7 wing unit is similar to the position of sector wings in the right 8 wing unit. The rotor blades of the fan and the blades of the straightener are not shown conditionally,

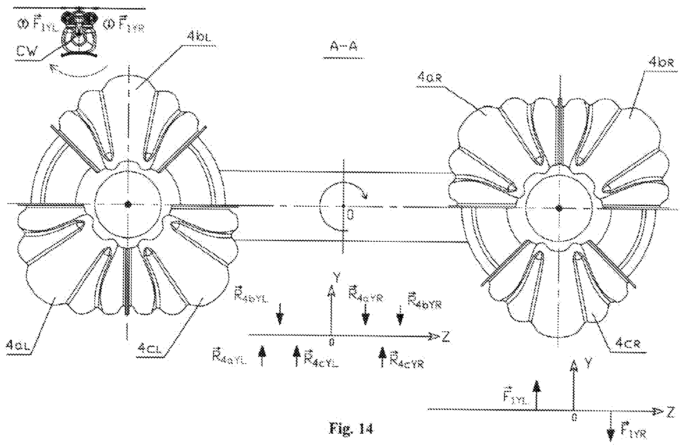

Fig. 14 shows section A-A, the position of sector wings of the left 7 and right 8 wing units; projection directions R̅→_{4aYL}, R̅→_{4bYL}, R̅→_{4cYL}, R̅→_{4aYR}, R̅→_{4bYR},R̅→_{4cYR} forces in the vertical plane YOZ, acting respectively on the movable sector wings 4_{AL}, 4_{BL}, 4_{CL} of the left 7 wing unit and on the movable sector wings 4_{AR}, 4_{BR}, 4_{CR} of the right 8 wing unit; projection directions of the resultant forces F̅→_{IYL} and F̅→_{IYR} in the vertical plane YOZ, The arc arrow shows the direction of the aircraft body's roll right rotation relative to the longitudinal axis OX, The rotor blades of the fan and the blades of the straightener are not shown conditionally.

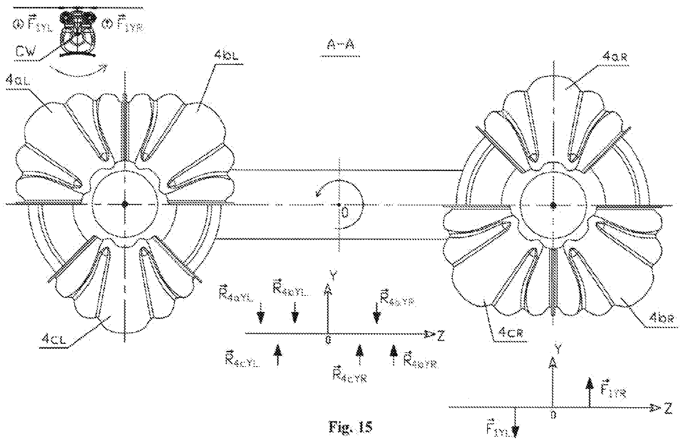

Fig. 15 shows section A-A, the position of sector wings of the left 7 and right 8 wing units; projection directions R̅→_{4aYL}, R̅→_{4bYL}, R̅→_{4cYL}, R̅→_{4aYR}, R̅→_{4bYR},R̅→_{4cYR} of forces in the vertical plane YOZ, acting respectively on the movable sector wings 4_{AL},4_{BL},4_{CL} of the left wing unit 7 and on the movable sector wings 4_{AR},4_{BR},4_{CR} of the right wing block 8; projection directions of the resultant forces F̅→_{IYL} and F̅→_{IYR} in the vertical plane YOZ. The arc arrow shows the direction of the aircraft body's roll left rotation relative to the longitudinal axis OX, The rotor blades of the fan and the blades of the straightener are not shown conditionally.

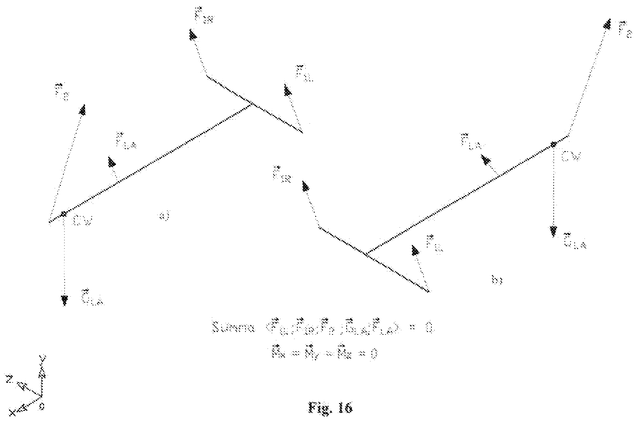

Fig. 16 (a, b) shows the conditional schemes of the forces acting on the aircraft in cases where: a) the claimed control system that contains two symmetrically installed wing units and is located behind the main rotor, looking forward; b) the claimed control system contains two symmetrically installed wing units and is located in front of the main rotor, looking forward, The total vector of all aerodynamic and reactive forces for the wing units are shown respectively as F̅→_{IL} for the lefl 7 wing unit and F̅→_{IR} for the right 8 wing unit; the total vector of all aerodynamic forces for the main rotor is shown as F̅→₂, the vector G̅→_{LA} is shown as the weight of the aircraft, and the vector F̅→_{LA} is shown as the resultant force of the interaction of the aircraft body with the airflow coming from the main rotors and fans, as well as with the disturbed airflows of the surrounding environment. For the sake of convenience, the directions of OX, OY, OZ coordinate axes, parallel to the respective axes of the coordinate system associated with the aircraft, are shown in Fig. 16, the directions of the vectors are conditionally depicted in the case if the aircraft is in hovering mode, and the conditions are provided in the form of ratios under which the aircrafts hovering in the air will be realized, namely: 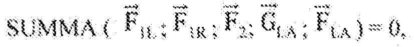 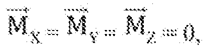 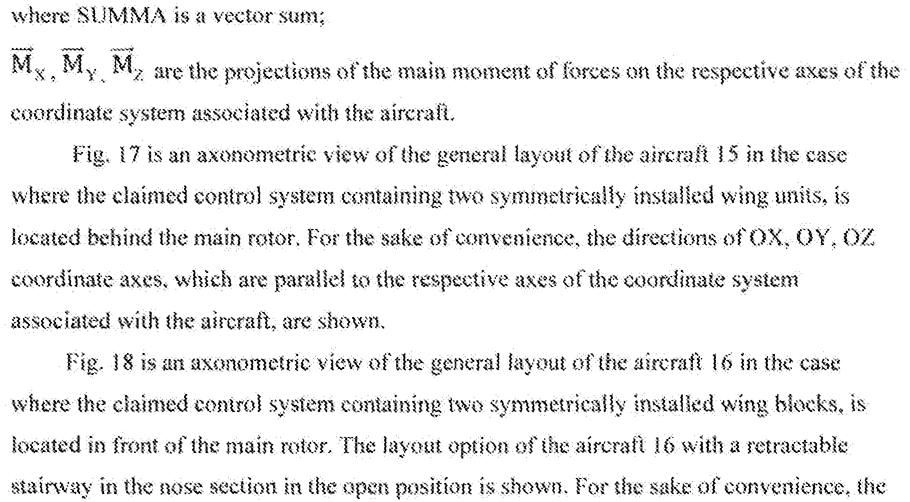 directions of OX, OY, OZ coordinate axes, parallel to the respective axes of the coordinate system associated with the aircraft are shown.

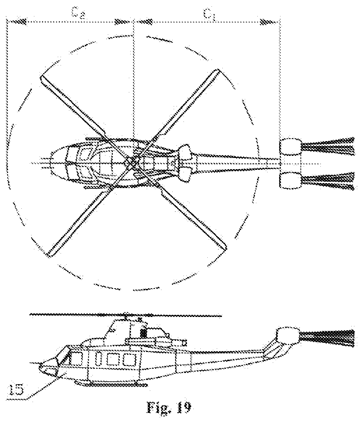

Fig. 19 is a top and side view of the layout of the aircraft 15 in the case where the claimed control system, containing two symmetrically installed wing units, is located behind the main rotor and looking forward. The values C₁ and C₂ characterizing the aircraft are shown, where C₁ is the distance from the center of rotation of the main rotors to the leading edge of the wing unit, and C₂ is the distance of half the diameter of the circle swept by the main rotors.

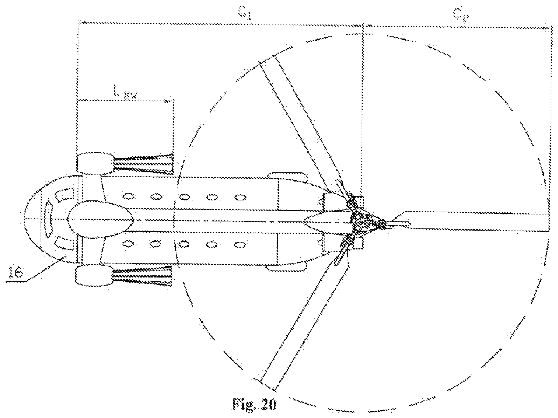

Fig. 20 is a top view of the general layout of the aircraft 16 in the case where the claimed control system, containing two symmetrically installed wing units, is located in front of the main rotor and looking forward. The distances C₁ and C₂, as well as the length of the wing unit Law, are shown.

### Modes for Carrying out the Invention

The proposed aircraft control system operates as follows (Fig, 1-20),

The operation uses an aerodynamic method of interaction between the airflow and aerodynamic surfaces in order to create control forces and moments.

According to the invention, two wing units 7 and 8 are installed symmetrically to the left and right of the vertical plane of symmetry of the aircraft using the cross-sectional 1 power element and the fairing 3 of the cross-sectional power element, which has an aerodynamic profile in cross-section.

The power housing 2 of the wing unit, the fan frame 5, the wing gearbox body 10, and the cross-sectional 1 power element of the wing unit are rigidly connected to each other and to the aircraft body design.

The left 7 and right 8 wing units, made similarly, contain a fan located at the front of the aircraft, looking forward, and creating a high-energy airflow, inside the fan frame 5, a fan drive is coaxially located, which can be an electric drive motor, a gas turbine jet engine, or an internal combustion engine, and the fan blades can be either pulling or pushing

In each wing block (Fig, 1-20), coaxially following the fan, three special-shaped sector wings 4a, 4b, 4c are installed in the airflow. These wings are movable relative to each other and can move in a circular trajectory clockwise or counterclockwise around the longitudinal axis of the fan. Each sector wing can move within the wing unit in such a way that it can connect with the adjacent wing, forming either a pair of two wings or a trio of three wings, creating a single surface Interacting with the airflow of the fan.

Each sector wing 4a, 4b, de is rigidly connected to the gear wheel 12, which has a circular groove on both sides in order to place the bearing ball and forms a gear pair with the pinion cog 13, which is rigidly mounted on the movable rotor of the electric drive motor 11. Supporting power rings 14 of the wing gearbox are installed between the gear wheels 12, which together with the gear wheels 12 and the wing gearbox body 10 form a double-sided ball bearing assembly, ensuring free rotation of the gear wheels 12. The electric drive motors 11 are rigidly installed in the wing gearbox body 10 and serve as drives for the pinion cog 13,

Each sector wing 4a, 4b, 4c has a geometrically identical shape and surface area relative to each other and interacts with the high-energy airflow coming from the fan. The high-energy airflow coming from the fan enters the zone where sector wings 4a, 4b, 4c are located, actively interacting and "adhering" to the underlying surfaces of sector wings 4a, 4b, 4c due to the viscous properties of the air. This phenomenon is known in aerodynamics as the Coanda effect (see references: 1) L. G. Loitsyanskiy. Mechanika zhidkosti i gaza. - Moscow: "Drofa" Publishers, 2003, 7th edition, pp. 504-507; 2) Caroline Labert, On Some Recent Applications of the Coanda Effect. International Journal of Acoustics and Vibration, Recent Applications of the Coanda Effect. Inernational Journal of Acoustics and Vibration, Vol, 16, No, 3, p, 144, 2011). The surface shape of sector wings 4a, 4b, 4c ensures smooth airflow along the entire underlying surface of the sector wing 4 at all fan speeds, creating a low-pressure area on the underlying surface of the sector wing 4. Due to viscous forces, it deflects part of the airflow tangentially to the trailing edge of the sector wing 4. In the process of interaction between the high-energy airflow and the surface of the sector wing 4, a cross-wind aerodynamic force arises due to the pressure difference on the inner and outer surfaces of the sector wing 4. This force has a projection perpendicular to the longitudinal axis of the sector wing 4. Additionally, a reactive force impulse of the airflow coming from the trailing edge of the sector wing 4 is created, which also has a force projection perpendicular to the longitudinal axis of the sector wing 4. The spatial position of the sector wing 4 determines the direction of the resulting cross-wind aerodynamic force vector of the sector wing 4 in space. When summing the cross-wind aerodynamic force vectors of the three sector wings 4a, 4b, 4c of one wing unit, a resultant cross-wind force vector, which forms the basis for generating the control moment of forces for the wing unit, is created. When the left 7 and right 8 sector wing units operate together, it is possible to generate the necessary control moments of forces relative to the OX, OY and OZ axes associated with the aircraft's body.

The conditions for generating control impacts depending on the spatial position of the sector wings 4a, 4b, 4c are shown by arrows in the figures: pitching down is shown in Fig. 10; pitching up is shown in Fig. 11; yawing, and turning the body to the left and looking forward are shown in Fig. 12; turning the body to the right and looking forward is shown in Fig. 13; rolling the body clockwise and looking forward is shown in Fig. 14; and rolling the body counterclockwise and looking forward is shown in Fig. 15. By summing the force impulses in the longitudinal direction, **a** reactive force of the wing unit's airflow is generated.

The control system for moving the sector wings 4 in each wing unit operates according to the following algorithm: the aircraft control system, using information from the flight navigation complex, issues commands to create the necessary control moments to the control mechanisms in each wing unit. In its turn, the control system of the position of the sector wings 4 in each wing unit issues commands to the actuation mechanisms to move the sector wings 4 into the required configuration, using data from position sensors of each sector wing, and based on the aircraft's response to the control action, the control system issues commands for corrective action. The control forces and moments, as well as the reactive forces generated by the wing units, are transmitted to the aircraft's body through rigid elements such as the gearbox housing 8, the power housing 2 of the wing unit, and the cross-sectional 1 power element of the wing unit.

When there are three sector wings 4a, 4b, 4c in the wing unit that are geometrically identical, and when the angle between the adjacent symmetry planes of each sector wing is 120° (120° x 3 = 360°, representing a full circle), or 90° (90° x 4 = 360°) for four sector wing configuration, or 72° (72° x 5 = 360°) for five sector wing configuration, and so on, then the resultant force of all the cross-wind aerodynamic forces of the sector wings 4 in the wing unit is zero. In this case, the sector wing unit is only a source of reactive force.

By controlling the position of the sector wings 4 in the wing units and regulating the speed of the fans in the wing units, it is possible to create a cross-wind aerodynamic force solely to compensate for the reactive torque of the helicopter's main rotor.

Considering the described operation based on the use of the proposed control system, we will supplement the above-mentioned general advantages of the invention compared to the general disadvantages of known analogs, as well as the additional advantages of the invention compared to the features of specific known aircrafts.

A feature of both types of layouts in the proposed object is that it significantly increases the range of longitudinal and transverse balancing of the aircraft compared to the traditional single-rotor helicopter layout, the twin-rotor helicopter layout in coaxial rotor configurations, or in configurations where the rotor axes are spaced along the longitudinal axis, such as in the CH-47 "Chinook" helicopter (The Aviation Factfile. Helicopters. Military, Civilian and Rescue Rotorcraft / General Editor: Robert Jackson, London: Grange Books, 2005, pp. 72-73), or across the longitudinal axis, such as in the V-12 helicopter (S. Yu. Yesaulov, O. P, Bakhov, I. S. Dmitriyev. Vertolyot kak object ipravleniya, M. Mashinostroyenive, 1977, pp. 7-10).

Another important effect of using the presented technical solution in order to modernize (improve) helicopters is the significant reduction in the load on the swash plate, which controls the angle of attack of each blade of the multi-blade main rotor of the helicopter, it is possible because some control tasks will be performed by the proposed wing units, located on the tail boom or in front of the fuselage, in this case, the proposed wing units have a large arm of control forces relative to the center of gravity of the helicopter in order to control pitching down, pitching up, yaw, and roll Thus, the energy losses of the main rotor for control tasks are reduced.

The placement of the proposed wing units on the left and right side of the helicopter's tail boom behind the inhabited module of the fuselage or on the right and left side of the inhabited module of the fuselage will increase the safety level for the crew and passengers compared to known helicopter configurations that use an air propeller as an additional source of propulsion force in front of or behind the fuselage in the longitudinal plane of symmetry, especially in case of emergency landings during pitching down.

Similarly, the design of unmanned serial vehicles (UAVs) with a main rotor of the proposed wing units located symmetrically relative to the longitudinal plane of symmetry of the UAV behind or in front of the UAV body makes it possible to improve the safety level of the payload module and the main rotor drive engines in case of emergency landings during pitching down.

Another advantage of the proposed technical solution is that the control moments created by adjusting the position of the sector wings can be generated in a very short time, determined by the speed of the sector wing drive motors. This is very important for ensuring high responsiveness of the helicopter control system and reducing the aircraft's response time to input control The short time required to create control forces also significantly improves the stability of the aircraft when exposed to wind gusts and other non-stationary types of impacts.

Since the airflow around aerodynamic surfaces is a three-dimensional nonlinear process and depends on many physical factors, it is theoretically impossible to predict and justify the optimization of the design characteristics of the proposed object.

Therefore, the optimization of geometric parameters of sector wings, which will minimize energy losses of the airflow of the fan spent on compensating for the operation of friction forces when interacting with the underlying surface of the sector wings, and the optimization of the other claimed design characteristics of the proposed object were carried out using standard theoretical calculation methods and model tests accepted in hydromechanies (Phizicheskiy Entsiklopedicheskiy Slovar/Ed. by Prokhorov A, M.. - M.: Sovetskaya Entsiklopediya, 1983, p. 118; Johnson W. Rotorcraft Aeromechanics. Cambridge university press, 2013, 927 pages; Johnson U. Teoriya Vertolyota: in 2 books. Translated from English - M.: "Mir", 1983. - (Aviatsionnaya i reketno-kosmicheskaya technika). Book 1, p. 302; N. F. Krasnov. Aerodinamika. P. I. Osnovy teorii. Aerodinamika prophilya i kryla. Textbook for universities. - M., 1976. - p, 384; N. F. Krasnov, Aerodinamika. Ch.P. Metody aerodinamicheskogo raschyota, Textbook for universities. - 3rd edition, revised and supplemented - M., Higher School, 1980. - p. 416), It was found that the claimed ranges are optimal In other cases, outside these optimal ranges, the efficiency of using the airflow energy spent on generating the resultant force in order to control the aircraft decreases by at least 10%

The use of wing units of the presented design will make it possible to create highspeed, safer, more maneuverable, and more energy-efficient helicopters, allowing for the expansion of their use and application areas. For example, in the configuration where the wing units are installed in the nose of the aircraft, as shown in Fig. 18, by using a retractable stairway design in the nose, it is possible to create an aircraft for rescuing people in distress from the upper floors of high-rise buildings or from sheer vertical cliffs in meantainous areas.

## Claims

1. An aircraft control system which has two identical modules in the form of a wing unit (7, 8), each of which contains a fan and an aerodynamic special-shaped wing (4) positioned in the airflow of the fan, designed in the form of a double-curved open surface made up by a system of longitudinal grooves along the entire wing surface and with a vertical longitudinal plane of symmetry; along the trajectory of the airflow, the wing (4) has a convergent segment and a divergent segment, between the convergent and the divergent segments there is a smooth transitional segment; the wing (4) longitudinal outlines have end elements; the system of longitudinal grooves of the wing (4) consists of the central grooves provided in the wing (4) central part and of the lateral grooves provided in the wing (4) side parts; the vertices of the central and lateral grooves are rounded, in so doing, the generatrix curvature radii for the groove vertices are smaller than the generatrix curvature radii for the groove lower parts; the wing unit (7, 8) contains a flow straightener mounted coaxially with the fan between the fan and the wing leading edge and rigidly connected to a fan frame (5) such that there is a framing cylindrical fairing mounted coaxially with the fan in front of the wing leading edge, inside which there are a circular flow straightener and the fan; wherein two identical modular wing units (7, 8) are configured to be symmetrically located relative to the longitudinal plane of symmetry of the aircraft and connected to each other by a rigid cross-sectional (1) power element, which is configured to be positioned perpendicular to the longitudinal plane of symmetry of the aircraft and equipped with fastening elements; these fastening elements rigidly attach, in use, the cross-sectional (1) power element to the aircraft body, in so doing, the cross-sectional (1) power element with fastening elements is rigidly framed by a fairing (3) of the cross-sectional (1) power element, which has an aerodynamic profile in the cross-section; **characterized in that** the wing unit (7, 8) contains "i" number of special-shaped wings (4), where "i" is in the range of 3 ≤ i ≤ 7, and is designed so that each special-shaped wing (4) can be placed in specific sectors of a circle representing the cross-section of the airflow coming from the fan, and, due to this positioning capability, each wing is characterized as a sector wing (4); the sector wings (4) are installed at an equal distance from the fan's axis of rotation and can move around the fan's longitudinal axis along a circular trajectory, ensuring that during circular movement, the fan's longitudinal axis always lies in the longitudinal plane of symmetry of each sector wing (4); the circular movements of the sector wings (4) around the fan's longitudinal axis are ensured by a special wing gearbox design, in which each sector wing (4) is rigidly attached to one gear wheel (12), with ring grooves on both sides for bearing balls placement, and, together with the supporting power rings (14) and the housing of the wing gearbox (10) they form a double-sided ball bearing assembly; the gear wheel (12) is driven into circular motion by a pinion cog (13), rigidly mounted on the movable rotor of an electric drive motor (11), and the electric drive motor's (11) housing is rigidly installed in the wing gearbox housing (10); each sector wing (4) is installed in the wing unit (7, 8) so that the area of the wing gearbox housing (10) is located at the transitional segment of each sector wing (4), and the following ratios are maintained: the ratio of the distance from the leading edge of the sector wing (4) V to the leading edge of the wing gearbox housing (10) to the length of the convergent segment of the sector wing (4) L₁ lies in the range of 1,1 < V / L₁ < 1, 2, and the ratio of the longitudinal linear size of the wing gearbox housing (10) W to the length of the transition segment of the sector wing (4) L₂ lies in the range of 0,3 < W/L₂ < 0,8; the sector wings (4), rotating relative to the fan's longitudinal axis of rotation, can form movable combinations with each other by interlocking along the wings' (4) lateral longitudinal surfaces; the surfaces of the left and right tips of the sector wing (4) constitute the left and right lateral surfaces of the sector wing (4), accordingly, and are designed as longitudinal flanges with a width S_{sw}, cantilevered to the left and right from the longitudinal plane of symmetry of the sector wing (4), which, joining across the entire area of the flanges, can create combined surfaces of the sector wings (4) and, through a hermetic joint, prevent air flowing from the high-pressure zone on the lower surface of the sector wing (4) to the low-pressure zone on the upper surface of the sector wing (4); the width of the flange S_{sw} is constant along the entire length L_{sw} of the sector wing (4), and the ratio of the flange width S_{sw} to the fan's internal frame (5) diameter D₀ lies in the range of 0,05 < S_{sw} / D₀ < 0,15 along the entire length L_{sw} of the sector wing (4); each "i" sector wing (4) is **characterized by** an opening angle α_{swi}, which is the angle between two planes, that pass along the surfaces of the right and left tips of the wing (4), downstream from the fan, so that these planes intersect in a line coinciding with the fan's axis of rotation; the opening angle for an individual "i" sector wing (4) α_{swi} is similar across the convergent, transitional, and divergent segments, in so doing, for all sector wings (4) the opening angle has the same numerical value, and the minimum value of an opening angle of a sector wing (4) shall be no less than 40°; the opening angles of the sector wings (4) in each wing unit (7, 8) are **characterized by** the following ratio: the sum of the opening angles of all "i" sector wings (4) of one wing unit (7, 8) Σ α_{swi} is in the range of 120° ≤ Σ α_{swi} ≤ 300°, where 3 ≤ i ≤7.

2. The aircraft control system of claim 1, configured to be installed in an aircraft with a rotor (15, 16), and configured to be be installed in the rear part of the aircraft's body (15) behind the axis of rotation of the main rotors, or in the front part of the aircraft's body (16) body in front of the axis of rotation of the main rotors, so that, when the control system is located behind the axis of rotation of the main rotors, the following ratio must be followed: the ratio of the value C₁, equal to the distance from the center of rotation of the main rotors to the leading edge of the wing unit (7, 8), to the value C₂, equal to half the diameter of the circle swept by the main rotors, should lie in the range of 1,2 < C₁ /C₂ < 3; when the control system is located in front of the axis of rotation of the main rotors, the following ratio must be followed: the ratio of the difference between the value C₁ and the value L_{BW}, equal to the length of the wing unit (7, 8), to the value C₂ should lie in the range of 1,2 < (C₁ - L_{BW})/C₂ < 3.

## Patentansprüche

1. Flugzeugsteuersystem, das zwei identische Module in Form einer Flügeleinheit (7, 8) aufweist, von denen jede ein Gebläse und einen aerodynamischen Spezialformflügel (4) enthält, der im Luftstrom des Gebläses positioniert ist und in Form einer doppelt gekrümmten offenen Oberfläche ausgeführt ist, die durch ein System von Längsrillen entlang der gesamten Flügeloberfläche gebildet wird und eine vertikale Längssymmetrieebene aufweist; entlang der Trajektorie des Luftstroms weist der Flügel (4) einen konvergenten Abschnitt und einen divergenten Abschnitt auf, wobei sich zwischen dem konvergenten und dem divergenten Abschnitt ein glatter Übergangsabschnitt befindet; die Längskonturen des Flügels (4) weisen Endelemente auf; das System von Längsrillen des Flügels (4) besteht aus den zentralen Rillen, die im zentralen Teil des Flügels (4) vorgesehen sind, und aus den seitlichen Rillen, die in den Seitenteilen des Flügels (4) vorgesehen sind; die Scheitelpunkte der zentralen und seitlichen Rillen sind abgerundet, wobei die Krümmungsradien der Erzeugenden für die Rillenscheitelpunkte kleiner sind als die Krümmungsradien der Erzeugenden für die unteren Teile der Rillen; die Flügeleinheit (7, 8) enthält einen Strömungsgleichrichter, der koaxial mit dem Gebläse zwischen dem Gebläse und der Flügelvorderkante montiert ist und starr mit einem Gebläserahmen (5) verbunden ist, sodass eine umrahmende zylindrische Verkleidung koaxial mit dem Gebläse vor der Flügelvorderkante montiert ist, in deren Innerem sich ein kreisförmiger Strömungsgleichrichter und das Gebläse befinden; wobei zwei identische modulare Flügeleinheiten (7, 8) so konfiguriert sind, dass sie symmetrisch relativ zur Längssymmetrieebene des Flugzeugs angeordnet und durch ein starres Querschnitts-(1)-Kraftelement miteinander verbunden sind, das so konfiguriert ist, dass es senkrecht zur Längssymmetrieebene des Flugzeugs positioniert ist und mit Befestigungselementen ausgestattet ist; diese Befestigungselemente befestigen im Gebrauch das Querschnitts-(1)-Kraftelement starr am Flugzeugkörper, wobei das Querschnitts-(1)-Kraftelement mit Befestigungselementen starr von einer Verkleidung (3) des Querschnitts-(1)-Kraftelements umrahmt ist, die im Querschnitt ein aerodynamisches Profil aufweist; **dadurch gekennzeichnet, dass** die Flügeleinheit (7, 8) "i" Anzahl von Spezialformflügeln (4) enthält, wobei "i" im Bereich von 3 ≤ i ≤ 7 liegt, und so ausgelegt ist, dass jeder Spezialformflügel (4) in bestimmten Sektoren eines Kreises platziert werden kann, der den Querschnitt des vom Gebläse kommenden Luftstroms darstellt, und aufgrund dieser Positionierungsfähigkeit jeder Flügel als Sektorflügel (4) charakterisiert ist; die Sektorflügel (4) in gleichem Abstand von der Drehachse des Gebläses installiert sind und sich um die Längsachse des Gebläses entlang einer kreisförmigen Trajektorie bewegen können, wodurch sichergestellt wird, dass während der Kreisbewegung die Längsachse des Gebläses immer in der Längssymmetrieebene jedes Sektorflügels (4) liegt; die Kreisbewegungen der Sektorflügel (4) um die Längsachse des Gebläses durch eine spezielle Flügelgetriebekonstruktion gewährleistet werden, bei der jeder Sektorflügel (4) starr an einem Zahnrad (12) befestigt ist, das auf beiden Seiten Ringnuten zur Aufnahme von Lagerkugeln aufweist, und zusammen mit den tragenden Kraftringen (14) und dem Gehäuse des Flügelgetriebes (10) eine doppelseitige Kugellagerbaugruppe bildet; das Zahnrad (12) durch ein Ritzel (13) in Kreisbewegung versetzt wird, das starr auf dem beweglichen Rotor eines elektrischen Antriebsmotors (11) montiert ist, und das Gehäuse des elektrischen Antriebsmotors (11) starr im Gehäuse des Flügelgetriebes (10) installiert ist; jeder Sektorflügel (4) in der Flügeleinheit (7, 8) so installiert ist, dass sich der Bereich des Gehäuses des Flügelgetriebes (10) am Übergangsabschnitt jedes Sektorflügels (4) befindet, und die folgenden Verhältnisse eingehalten werden: das Verhältnis des Abstands von der Vorderkante des Sektorflügels (4) V zur Vorderkante des Gehäuses des Flügelgetriebes (10) zur Länge des konvergenten Abschnitts des Sektorflügels (4) L1 liegt im Bereich von 1,1 < V / L1 < 1,2, und das Verhältnis der longitudinalen linearen Größe des Gehäuses des Flügelgetriebes (10) W zur Länge des Übergangsabschnitts des Sektorflügels (4) L2 liegt im Bereich von 0,3 < W/L2 < 0,8; die Sektorflügel (4), die sich relativ zur Längsdrehachse des Gebläses drehen, bewegliche Kombinationen miteinander bilden können, indem sie sich entlang der seitlichen Längsflächen der Flügel (4) ineinander verzahnen; die Flächen der linken und rechten Spitzen des Sektorflügels (4) entsprechend die linken und rechten seitlichen Flächen des Sektorflügels (4) bilden und als Längsflansche mit einer Breite Ssw ausgeführt sind, die nach links und rechts von der Längssymmetrieebene des Sektorflügels (4) auskragen, welche durch Verbindung über die gesamte Fläche der Flansche kombinierte Flächen der Sektorflügel (4) bilden können und durch eine hermetische Verbindung das Strömen von Luft aus der Hochdruckzone auf der unteren Fläche des Sektorflügels (4) zur Niederdruckzone auf der oberen Fläche des Sektorflügels (4) verhindern; die Breite des Flansches Ssw über die gesamte Länge Lsw des Sektorflügels (4) konstant ist und das Verhältnis der Flanschbreite Ssw zum Innendurchmesser D0 des Gebläserahmens (5) im Bereich von 0,05 < Ssw / D0 < 0,15 über die gesamte Länge Lsw des Sektorflügels (4) liegt; jeder "i" Sektorflügel (4) durch einen Öffnungswinkel αswi charakterisiert ist, der der Winkel zwischen zwei Ebenen ist, die entlang der Flächen der rechten und linken Spitzen des Flügels (4) stromabwärts vom Gebläse verlaufen, sodass sich diese Ebenen in einer Linie schneiden, die mit der Drehachse des Gebläses zusammenfällt; der Öffnungswinkel für einen einzelnen "i" Sektorflügel (4) αswi über den konvergenten, den Übergangs- und den divergenten Abschnitt ähnlich ist, wobei für alle Sektorflügel (4) der Öffnungswinkel den gleichen numerischen Wert hat und der Mindestwert eines Öffnungswinkels eines Sektorflügels (4) nicht weniger als 40° betragen darf; die Öffnungswinkel der Sektorflügel (4) in jeder Flügeleinheit (7, 8) durch das folgende Verhältnis charakterisiert sind: die Summe der Öffnungswinkel aller "i" Sektorflügel (4) einer Flügeleinheit (7, 8) Σ αswi liegt im Bereich von 120° ≤ Σ αswi ≤ 300°, wobei 3 ≤ i ≤ 7.

2. Flugzeugsteuersystem nach Anspruch 1, wobei es in einem Flugzeug mit einem Rotor (15, 16) installiert ist und so konfiguriert ist, dass es im hinteren Teil des Flugzeugkörpers (15) hinter der Drehachse der Hauptrotoren oder im vorderen Teil des Flugzeugkörpers (16) vor der Drehachse der Hauptrotoren installiert wird, sodass, wenn das Steuersystem hinter der Drehachse der Hauptrotoren angeordnet ist, das folgende Verhältnis eingehalten werden muss: das Verhältnis des Wertes C1, der dem Abstand vom Drehzentrum der Hauptrotoren zur Vorderkante der Flügeleinheit (7, 8) entspricht, zum Wert C2, der der Hälfte des Durchmessers des von den Hauptrotoren überstrichenen Kreises entspricht, soll im Bereich von 1,2 < C1 /C2 < 3 liegen; wenn das Steuersystem vor der Drehachse der Hauptrotoren angeordnet ist, muss das folgende Verhältnis eingehalten werden: das Verhältnis der Differenz zwischen dem Wert C1 und dem Wert LBW, der der Länge der Flügeleinheit (7, 8) entspricht, zum Wert C2 soll im Bereich von 1,2 < (C1 - LBW) /C2 < 3 liegen.

## Revendications

1. Système de commande d'aéronef qui comporte deux modules identiques sous la forme d'une unité d'aile (7, 8), chacun desquels contient un ventilateur soufflant et une aile aérodynamique de forme spéciale (4) positionnée dans le flux d'air du ventilateur, conçue sous la forme d'une surface ouverte à double courbure constituée par un système de rainures longitudinales sur toute la surface de l'aile et avec un plan de symétrie longitudinal vertical ; le long de la trajectoire du flux d'air, l'aile (4) comporte un segment convergent et un segment divergent, entre le segment convergent et le segment divergent se trouve un segment de transition lisse ; les contours longitudinaux de l'aile (4) comportent des éléments d'extrémité ; le système de rainures longitudinales de l'aile (4) est constitué des rainures centrales prévues dans la partie centrale de l'aile (4) et des rainures latérales prévues dans les parties latérales de l'aile (4) ; les sommets des rainures centrales et latérales sont arrondis, ce faisant, les rayons de courbure de la génératrice pour les sommets des rainures sont plus petits que les rayons de courbure de la génératrice pour les parties inférieures des rainures ; l'unité d'aile (7, 8) contient un redresseur de flux monté coaxialement avec le ventilateur entre le ventilateur et le bord d'attaque de l'aile et relié rigidement à un cadre de ventilateur (5) de sorte qu'il y a un carénage cylindrique d'encadrement monté coaxialement avec le ventilateur devant le bord d'attaque de l'aile, à l'intérieur duquel se trouvent un redresseur de flux circulaire et le ventilateur ; dans lequel deux unités d'aile modulaires identiques (7, 8) sont configurées pour être
situées symétriquement par rapport au plan de symétrie longitudinal de l'aéronef et reliées l'une à l'autre par un élément de puissance transversal (1) rigide, qui est configuré pour être positionné perpendiculairement au plan de symétrie longitudinal de l'aéronef et équipé d'éléments de fixation ; ces éléments de fixation fixent rigidement, en utilisation, l'élément de puissance transversal (1) au corps de l'aéronef, ce faisant, l'élément de puissance transversal (1) avec les éléments de fixation est rigidement encadré par un carénage (3) de l'élément de puissance transversal (1), qui a un profil aérodynamique en section transversale ; **caractérisé en ce que** l'unité d'aile (7, 8) contient un nombre « i » d'ailes de forme spéciale (4), où « i » est dans la plage de 3 ≤ i ≤ 7, et est conçue de sorte que chaque aile de forme spéciale (4) peut être placée dans des secteurs spécifiques d'un cercle représentant la section transversale du flux d'air provenant du ventilateur, et, en raison de cette capacité de positionnement, chaque aile est caractérisée comme une aile sectorielle (4) ; les ailes sectorielles (4) sont installées à une distance égale de l'axe de rotation du ventilateur et peuvent se déplacer autour de l'axe longitudinal du ventilateur le long d'une trajectoire circulaire, garantissant que pendant le mouvement circulaire, l'axe longitudinal du ventilateur se trouve toujours dans le plan de symétrie longitudinal de chaque aile sectorielle (4) ; les mouvements circulaires des ailes sectorielles (4) autour de l'axe longitudinal du ventilateur sont assurés par une conception spéciale de boîte de vitesses d'aile, dans laquelle chaque aile sectorielle (4) est fixée rigidement à une roue dentée (12), avec des rainures annulaires des deux côtés pour le placement des billes de roulement, et, ensemble avec les anneaux de puissance de support (14) et le boîtier de la boîte de vitesses d'aile (10), ils forment un ensemble de roulement à billes double face ; la roue dentée (12) est entraînée en mouvement circulaire par un pignon (13), monté rigidement sur le rotor mobile d'un moteur d'entraînement électrique (11), et le boîtier du moteur d'entraînement électrique (11) est installé rigidement dans le boîtier de la boîte de vitesses d'aile (10) ; chaque aile sectorielle (4) est installée dans l'unité d'aile (7, 8) de sorte que la zone du boîtier de la boîte de vitesses d'aile (10) est située au niveau du segment de transition de chaque aile sectorielle (4), et les rapports suivants sont maintenus : le rapport de la distance du bord d'attaque de l'aile sectorielle (4) V au bord d'attaque du boîtier de la boîte de vitesses d'aile (10) à la longueur du segment convergent de l'aile sectorielle (4) L1 se situe dans la plage de 1,1 < V / L1 < 1,2, et le rapport de la dimension linéaire longitudinale du boîtier de la boîte de vitesses d'aile (10) W à la longueur du segment de transition de l'aile sectorielle (4) L2 se situe dans la plage de 0,3 < W/L2 < 0,8 ; les ailes sectorielles (4), tournant par rapport à l'axe de rotation longitudinal du ventilateur, peuvent former des combinaisons mobiles les unes avec les autres par verrouillage le long des surfaces longitudinales latérales des ailes (4) ; les surfaces des extrémités gauche et droite de l'aile sectorielle (4) constituent les surfaces latérales gauche et droite de l'aile sectorielle (4), respectivement, et sont conçues comme des brides longitudinales d'une largeur Ssw, en porte-à-faux à gauche et à droite du plan de symétrie longitudinal de l'aile sectorielle (4), qui, en se joignant sur toute la surface des brides, peuvent créer des surfaces combinées des ailes sectorielles (4) et, par un joint hermétique, empêcher l'air de s'écouler de la zone de haute pression sur la surface inférieure de l'aile sectorielle (4) vers la zone de basse pression sur la surface supérieure de l'aile sectorielle (4) ; la largeur de la bride Ssw est constante sur toute la longueur Lsw de l'aile sectorielle (4), et le rapport de la largeur de la bride Ssw au diamètre D0 du cadre interne (5) du ventilateur se situe dans la plage de 0,05 < Ssw / D0 < 0,15 sur toute la longueur Lsw de l'aile sectorielle (4) ; chaque aile sectorielle « i » (4) est **caractérisée par** un angle d'ouverture αswi, qui est l'angle entre deux plans, qui passent le long des surfaces des extrémités droite et gauche de l'aile (4), en aval du ventilateur, de sorte que ces plans se croisent en une ligne coïncidant avec l'axe de rotation du ventilateur ; l'angle d'ouverture pour une aile sectorielle individuelle « i » αswi est similaire à travers les segments convergent, de transition et divergent, ce faisant, pour toutes les ailes sectorielles (4) l'angle d'ouverture a la même valeur numérique, et la valeur minimale d'un angle d'ouverture d'une aile sectorielle (4) ne doit pas être inférieure à 40° ; les angles d'ouverture des ailes sectorielles (4) dans chaque unité d'aile (7, 8) sont **caractérisés par** le rapport suivant : la somme des angles d'ouverture de toutes les ailes sectorielles « i » (4) d'une unité d'aile (7, 8) Σ αswi est dans la plage de 120° ≤ Σ αswi ≤ 300°, où 3 ≤ i ≤ 7.

2. Système de commande d'aéronef selon la revendication 1, dans lequel il est installé dans un aéronef avec un rotor (15, 16), et configuré pour être installé dans la partie arrière du corps de l'aéronef (15) derrière l'axe de rotation des rotors principaux, ou dans la partie avant du corps de l'aéronef (16) devant l'axe de rotation des rotors principaux, de sorte que, lorsque le système de commande est situé derrière l'axe de rotation des rotors principaux, le rapport suivant doit être respecté : le rapport de la valeur C1, égale à la distance du centre de rotation des rotors principaux au bord d'attaque de l'unité d'aile (7, 8), à la valeur C2, égale à la moitié du diamètre du cercle balayé par les rotors principaux, doit se situer dans la plage de 1,2 < C1 /C2 < 3 ; lorsque le système de commande est situé devant l'axe de rotation des rotors principaux, le rapport suivant doit être respecté : le rapport de la différence entre la valeur C1 et la valeur LBW, égale à la longueur de l'unité d'aile (7, 8), à la valeur C2 doit se situer dans la plage de 1,2 < (C1 - LBW) /C2 < 3.
